# EUROPÄISCHE PATENTSCHRIFT

(11) **EP 2 130 740 B1**
(45) Veröffentlichungstag und Bekanntmachung des Hinweises auf die Patenterteilung: **04.12.2013**
(21) Anmeldenummer: 09161458.6
(22) Anmeldetag: 29.05.2009
(51) Int. Cl.: B61L 17/00, B61L 1/14, G01S 15/89

(54) **Steuereinrichtung für eine Ablaufanlage des schienengebundenen Verkehrs und Verfahren zum Betreiben einer solchen Anlage**
Control device for a gravity shunting yard for rail traffic and method for operating such a yard
Dispositif de commande pour une bosse de triage du trafic ferroviaire et procédé de fonctionnement d'une telle bosse

(30) Priorität: 05.06.2008 DE 102008027633
(43) Veröffentlichungstag der Anmeldung: 09.12.2009
(73) Patentinhaber: Siemens Aktiengesellschaft, 80333 München (DE)
(72) Erfinder: Skibbe, Sven, 38528 Adenbüttel (DE)

(56) Entgegenhaltungen:
- EP-A1- 0 863 064
- WO-A1-00/03265
- WO-A1-2007/134430
- FR-A1- 2 640 570
- FR-A1- 2 706 658
- US-A- 3 145 958
- US-A- 4 610 206
- US-A- 5 392 034

## Beschreibung

In Schwerkraft-Ablaufanlagen der Rangiertechnik werden Schienenfahrzeuge aus dem Berggleis in die Richtungsgleise sortiert. Dabei handelt es sich bei den Schienenfahrzeugen um Wagen bzw. Wagengruppen, die auch als Abläufe bezeichnet werden.

Eine Steuereinrichtung für eine Ablaufanlage des schienengebundenen Verkehrs mit einer Sensoreinrichtung zum Erfassen von auf ablaufende Schienenfahrzeuge bezogenen Messdaten ist aus der Veröffentlichung "Das Mikrocomputersystem MSR 32" der Siemens AG bekannt. Diese beschreibt eine Steuereinrichtung in Form eines Mikrocomputersystems zur Steuerung einer rangiertechnischen Ablaufanlage. Die bekannte Steuereinrichtung weist eine Sensoreinrichtung zum Erfassen von auf ablaufende Schienenfahrzeuge bezogene Messdaten in Form von zur Erkennung der Ablauftrennung verwendeten Lichtgittern auf. In Rangierbahnhöfen, dass heißt Ablaufanlagen, werden die vorgesehenen Trennstellen zwischen den ablaufenden Fahrzeugen, dass heißt den Abläufen, üblicherweise aufgrund logistischer Informationen, die beispielsweise das Fahrtziel umfassen, sowie technischer Randbedingungen, die beispielsweise Längen- bzw. Massenbegrenzungen umfassen können, im voraus bestimmt. Während des eigentlichen Ablaufbetriebes ist es jedoch erforderlich, zu überprüfen, ob die Trennungen auch an den vorgesehenen Stellen erfolgt sind. Hierdurch können Fehler, die sich beispielsweise beim Entkuppeln ergeben können, erkannt werden. Die Sensoreinrichtung in Form der Lichtgitter der bekannten Steuerreinrichtung ermöglicht somit eine automatische

Überwachung dahingehend, ob eine korrekte Trennung der Abläufe erfolgt ist.

Die vorliegende Erfindung betrifft eine Steuereinrichtung für eine Ablaufanlage des schienengebundenen Verkehrs mit einer Sensoreinrichtung zum Erfassen von auf ablaufende Schienenfahrzeuge bezogenen Messdaten, wobei die Sensoreinrichtung eine zumindest einen Ultraschallsensor umfassende Ultraschalleinrichtung ist.

Eine solche Steuereinrichtung ist aus der Druckschrift US 3 145 958 A bekannt.

Der vorliegenden Erfindung liegt die Aufgabe zugrunde, eine Steuereinrichtung für eine Ablaufanlage des schienengebundenen Verkehrs mit einer Sensoreinrichtung zum Erfassen von auf ablaufende Schienenfahrzeuge bezogenen Messdaten anzugeben, die in ihrem Aufbau besonders einfach und zugleich besonders leistungsfähig ist.

Diese Aufgabe wird gelöst durch eine erste erfindungsgemäße Steuereinrichtung mit den Merkmalen des Anspruchs 1. Des Weiteren wird die Aufgabe gelöst durch eine zweite erfindungsgemäße Steuereinrichtung mit den Merkmalen des Anspruchs 2.

Die jeweilige erfindungsgemäße Steuereinrichtung ist vorteilhaft, da sie eine besonders einfache und flexible Montage der Sensoreinrichtung der Steuereinrichtung ermöglicht. So ist für eine Sensoreinrichtung in Form einer Ultraschalleinrichtung im Unterschied zu Lichtgittern bzw. Lichtvorhängen lediglich ein Mast einseitig vom Gleis erforderlich, während Lichtgitter üblicherweise zwei bis drei Masten beidseitig des Gleises erfordern. Insbesondere bei kritischen Gleistopografien wird hierdurch eine freizügigere und flexiblere Bestimmung des Montageortes ermöglicht. Des Weiteren ist eine Ultraschalleinrichtung im Unterschied zu einem Lichtgitter unempfindlich gegen störende Lichteinstrahlung, dass heißt insbesondere unabhängig vom Sonnenstand, so dass sich die Fehleranfälligkeit der Steuereinrichtung reduziert und damit ihre Leistungsfähigkeit erhöht.

Es sei darauf hingewiesen, dass im Rahmen der jeweiligen erfindungsgemäßen Steuereinrichtung grundsätzlich beliebige Arten von Ultraschallsensoren eingesetzt werden können. Entsprechende Sensoren sind in verschiedenen Ausführungsformen auf dem Markt verfügbar und funktionieren üblicherweise derart, dass über eine angeregte Membran ein Ultraschall-Signal ausgesendet wird. Trifft dieses Signal bzw. dieser Puls auf ein Objekt, so erfolgt zumindest eine teilweise Reflektion, die zurück zum Sensor gelangt. Ein Messen der Zeitdifferenz zwischen Aussenden und Empfangen des Signals ermöglicht somit die Bestimmung der Entfernung zu dem Objekt. Während solche Ultraschallsensoren sowohl die Funktion des Senders als auch des Empfängers erbringen, sind darüber hinaus auch Ultraschalleinrichtungen bekannt, bei denen Sender und Empfänger als getrennte Komponenten realisiert sind, die gegenüber von einander angeordnet sind. Im Rahmen der jeweiligen erfindungsgemäßen Steuereinrichtung werden vorteilhafterweise Ultraschallsensoren verwendet, welche gleichzeitig als Sender und Empfänger arbeiten. In Abhängigkeit von den Gegebenheiten der jeweiligen Ablaufanlage sowie der jeweiligen Steuereinrichtung kann jedoch gegebenenfalls auch der Einsatz von Ultraschalleinrichtungen mit getrennten Sendern und Empfängern zweckmäßig sein.

Es sei an dieser Stelle nochmals angemerkt, dass es sich bei einem ablaufenden Schienenfahrzeug sowohl um einen einzelnen Wagen, als auch um eine Gruppe von Wagen handeln kann.

Die jeweilige erfindungsgemäße Steuereinrichtung ist derart ausgestaltet, dass sie ausgehend von den Messdaten zum Bestimmen des Abstands des Ultraschallsensors bzw. des jeweiligen Abstands der Ultraschallsensoren zu Bauteilen des jeweiligen ablaufenden Schienenfahrzeugs und/oder zur Ladung des jeweiligen ablaufenden Schienenfahrzeugs ausgebildet ist. Dies ist vorteilhaft, da die Bestimmung des Abstandes des jeweiligen Ultraschallsensors zu dem ablaufenden Fahrzeug bzw. dessen Ladung eine Auswertung erlaubt, die deutlich über eine reine Anwesenheitserkennung hinausgeht. Die Bestimmung des Abstandes des jeweiligen Ultraschallsensors zu dem jeweiligen ablaufenden Schienenfahrzeug bzw. zur Ladung dieses Schienenfahrzeugs kann dabei in Abhängigkeit von der jeweiligen konkreten Ausgestaltung von dem jeweiligen Ultraschallsensor selbst, von der Ultraschalleinrichtung oder einer weiteren Komponente der Steuereinrichtung vorgenommen werden.

Die erste erfindungsgemäße Steuereinrichtung ist zum Ermitteln eines Höhenprofils des ablaufenden Schienenfahrzeugs aus dem bestimmten Abstand bzw. den bestimmten Abständen ausgebildet. Dies ist vorteilhaft, da die Höhe des ablaufenden Schienenfahrzeugs eine Messgröße darstellt, die verschiedentlich für die Steuerung einer Ablaufanlage relevant sein kann. Es sei darauf hingewiesen, dass eine entsprechende Bestimmung des Höhenprofils des ablaufenden Schienenfahrzeugs grundsätzlich auch bei Schienenfahrzeugen möglich ist, die den Berggipfel der Ablaufanlage noch nicht überschritten haben, dass heißt noch nicht tatsächlich durch die Schwerkraft angetrieben von dem Ablaufberg ablaufen.

Weiterhin ist die erste erfindungsgemäße Steuereinrichtung derart ausgebildet, dass sie zur Verwendung des ermittelten Höhenprofils für eine Berechnung des voraussichtlichen Laufverhaltens des ablaufenden Schienenfahrzeugs ausgebildet ist. Dies ist vorteilhaft, da hierdurch beispielweise Windangriffsflächen, deren Größe im Rahmen der Berechnung des prognostizierten Laufverhaltens des ablaufenden Schienenfahrzeugs von Bedeutung ist, zumindest näherungsweise ermittelt werden können. Somit ermöglicht es die genannte bevorzugte Weiterbildung der erfindungsgemäßen Steuereinrichtung, die Genauigkeit der Prognose des Laufverhaltens des ablaufenden Schienenfahrzeugs zu verbessern.

Die zweite erfindungsgemäße Steuereinrichtung ist zum Ermitteln eines Seitenprofils des ablaufenden Schienenfahrzeugs aus dem bestimmten Abstand bzw. den bestimmten Abständen ausgebildet. Dies ist vorteilhaft, da hierdurch zusätzliche Informationen bereitgestellt werden können, die bei der Steuerung der Ablaufanlage berücksichtigt werden können.

Weiterhin ist die zweite erfindungsgemäße Steuereinrichtung zum Bestimmen des Typs und/oder des Beladungszustandes des ablaufenden Schienenfahrzeugs aus dem ermittelten Seitenprofil ausgebildet. Dies bietet den Vorteil, dass der Typ sowie der Beladungszustand des ablaufenden Schienenfahrzeugs bei der Steuerung der Ablaufanlage und bei der Prognose des voraussichtlichen Ablaufverhaltens berücksichtigt werden können. Hierbei ist es beispielsweise insbesondere von Interesse, Kesselwagen zu identifizieren, da diese insbesondere teilbeladen als sogenannte "Schwappwagen" ein kritisches Laufverhalten aufweisen können. Des Weiteren ermöglicht die Bestimmung des Seitenprofils beispielsweise das Erkennen der Ladungsverteilung auf Flach- oder Rungenwagen.

In einer bevorzugten Weiterbildung der jeweiligen erfindungsgemäßen Steuereinrichtung weist die Ultraschalleinrichtung mehrere in unterschiedlicher Höhe angebrachte Ultraschallsensoren auf. Dies ist vorteilhaft, da hierdurch auf ablaufende Schienenfahrzeuge bezogene Messdaten erfasst werden können, die unterschiedliche Komponenten bzw. Bauteile des Schienenfahrzeugs bzw. seiner Ladung betreffen.

In einer weiteren besonders bevorzugten Ausführungsform ist die jeweilige erfindungsgemäße Steuereinrichtung zum Erkennen einer Trennstelle zwischen einem ablaufenden Schienenfahrzeug und einem nachfolgenden Schienenfahrzeug anhand des zeitlichen Verlaufs des bestimmten Abstandes bzw. der bestimmten Abstände ausgebildet. Dies bietet den Vorteil, dass Fehler bei der Trennung der Schienenfahrzeuge, dass heißt der Abläufe, durch einen Vergleich mit Dispositionsdaten erkannt und entsprechende Maßnahmen zur Fehlerbehebung ergriffen werden können.

Vorteilhafterweise ist die jeweilige erfindungsgemäße Steuereinrichtung derart ausgestaltet, dass sie zum Erkennen einer Trennstelle zwischen dem ablaufenden Schienenfahrzeug und dem nachfolgenden Schienenfahrzeug ausgebildet ist, sofern der von dem Ultraschallsensor gemessene Abstand bzw. die von den Ultraschallsensoren gemessenen Abstände für eine vorgegebene Zeitdauer einen Grenzwert überschreitet bzw. überschreiten. Dies bietet den Vorteil, dass eine besonders zuverlässige Erkennung einer Trennstelle ermöglicht wird.

Vorteilhafterweise ist die jeweilige erfindungsgemäße Steuereinrichtung zum Melden der erkannten Trennstelle an eine zentrale Steuereinrichtung ausgebildet. Bei einer solchen zentralen Steuereinheit kann es sich beispielsweise um eine Melde- und Bedieneinrichtung oder ein Betriebsleitsystem handeln, die hierdurch zu einer Überprüfung der korrekten Trennung der Abläufe in die Lage versetzt werden. Hierbei können gegebenenfalls die Daten von weiteren Komponenten der Steuereinrichtung, wie beispielsweise von Radsensoren, berücksichtigt werden.

Die Erfindung betrifft des Weiteren ein Verfahren zum Betreiben einer Ablaufanlage des schienengebundenen Verkehrs, bei dem auf ablaufende Schienenfahrzeuge bezogene Messdaten mittels Ultraschall erfasst werden.

Ein solches Verfahren ist ebenfalls aus der Druckschrift US 3 145 958 A bekannt.

Hinsichtlich des Verfahrens liegt der vorliegenden Aufgabe zugrunde, ein besonders einfaches und zugleich leistungsfähiges Verfahren zum Betreiben einer Ablaufanlage des schienengebundenen Verkehrs anzugeben.

Diese Aufgabe wird erfindungsgemäß gelöst durch ein Verfahren mit den Merkmalen des Anspruchs 7. Des Weiteren wird diese Aufgabe gelöst durch ein Verfahren mit den Merkmalen des Anspruchs 8.

Die Vorteile des jeweiligen erfindungsgemäßen Verfahrens entsprechen im Wesentlichen denjenigen der jeweiligen erfindungsgemäßen Steuereinrichtung, so dass diesbezüglich auf die entsprechenden vorstehenden Ausführungen verwiesen wird. Dies gilt in analoger Weise auch hinsichtlich der im Folgenden genannten bevorzugten Weiterbildungen des jeweiligen erfindungsgemäßen Verfahrens, für die daher ebenfalls auf die vorstehenden Erläuterungen im Zusammenhang mit der entsprechenden bevorzugten Weiterbildung der jeweiligen erfindungsgemäßen Steuereinrichtung verwiesen wird.

Vorteilhafterweise ist das jeweilige erfindungsgemäße Verfahren derart ausgeprägt, dass die Messdaten von einer Ultraschalleinrichtung erfasst werden, die mehrere in unterschiedlicher Höhe angebrachte Ultraschallsensoren aufweist.

In einer weiteren bevorzugten Ausgestaltung ist das jeweilige erfindungsgemäße Verfahren derart ausgeführt, dass aus den Messdaten der Abstand des Ultraschallsensors bzw. der jeweilige Abstand der Ultraschallsensoren zu Bauteilen des jeweiligen ablaufenden Schienenfahrzeugs und/oder zur Ladung des jeweiligen ablaufenden Schienenfahrzeugs bestimmt wird.

In einer weiteren bevorzugten Weiterbildung des jeweiligen erfindungsgemäßen Verfahrens wird anhand des zeitlichen Verlaufs des bestimmten Abstands bzw. der bestimmten Abstände eine Trennstelle zwischen einem ablaufenden Schienenfahrzeug und einem nachfolgenden Schienenfahrzeug erkannt.

Vorteilhafterweise kann das jeweilige erfindungsgemäße Verfahren auch derart ausgestaltet sein, dass eine Trennstelle zwischen dem ablaufenden Schienenfahrzeug und dem nachfolgenden Schienenfahrzeug erkannt wird, sofern der von dem Ultraschallsensor gemessene Abstand bzw. die von den Ultraschallsensoren gemessenen Abstände für eine vorgegebene Zeitdauer einen Grenzwert überschreitet bzw. überschreiten.

In einer bevorzugten Ausführungsform ist das jeweilige erfindungsgemäße Verfahren derart ausgestaltet, dass die erkannte Trennstelle an eine zentrale Steuereinheit gemeldet wird.

Im Folgenden wird die Erfindung anhand von Ausführungsbeispielen näher erläutert. Hierzu zeigt
- Figur 1: zur Erläuterung eines ersten Ausführungsbeispiels des erfindungsgemäßen Verfahrens eine schematische Darstellung einer Ablaufanlage vor der Trennung eines ablaufenden Schienenfahrzeugs,
- Figur 2: zur weiteren Erläuterung des ersten Ausführungsbeispiels des erfindungsgemäßen Verfahrens eine weitere schematische Skizze der Ablaufanlage nach der Trennung des ablaufenden Schienenfahrzeugs,
- Figur 3: schematische Skizzen zur Erläuterung eines zweiten Ausführungsbeispiels des erfindungsgemäßen Verfahrens anhand eines ablaufenden Fahrzeugs in Form eines Kesselwagens,
- Figur 4: schematische Skizzen zur Erläuterung des zweiten Ausführungsbeispiels des erfindungsgemäßen Verfahrens anhand eines ablaufenden Fahrzeugs in Form eines Flachwagens,
- Figur 5: schematische Skizzen zur Erläuterung des zweiten Ausführungsbeispiels des erfindungsgemäßen Verfahrens anhand eines ablaufenden Fahrzeugs in Form eines Rungenwagens und
- Figur 6: schematische Skizzen zur Erläuterung des zweiten Ausführungsbeispiels des erfindungsgemäßen Verfahrens anhand eines ablaufenden Fahrzeugs in Form eines Kasten- bzw. Containerwagens.

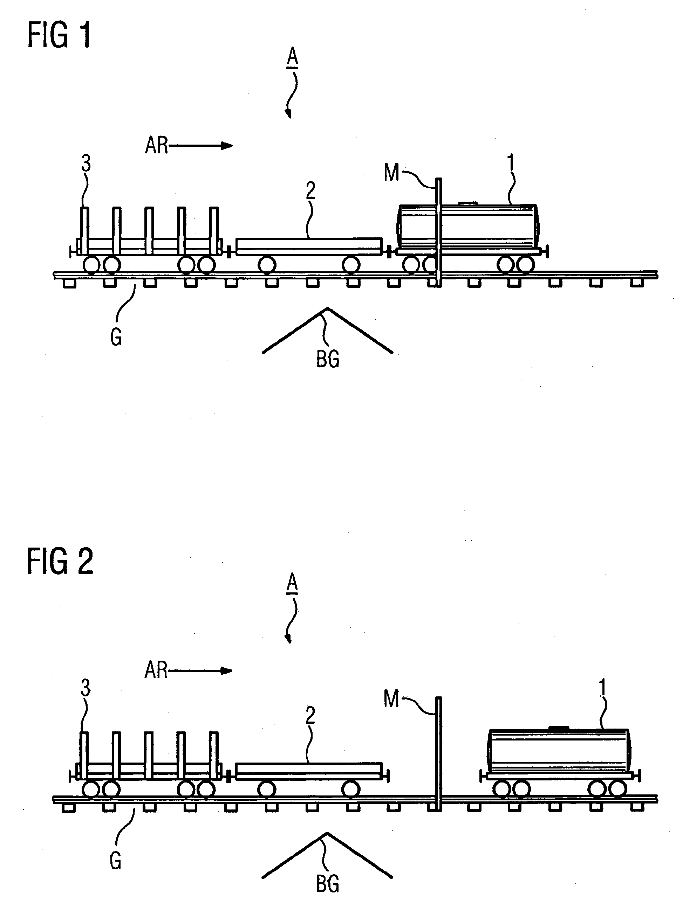

Figur 1 zeigt zur Erläuterung eines ersten Ausführungsbeispiels des erfindungsgemäßen Verfahrens eine schematische Darstellung einer Ablaufanlage vor der Trennung eines ablaufenden Schienenfahrzeugs. Gezeigt ist eine Ablaufanlage A, auf der sich ablaufende Fahrzeuge 1, 2, 3 in Form von aneinander gekuppelten Güterwagen auf einem Gleis G in eine Abdrückrichtung AR bewegen. Zur besseren Veranschaulichung ist hierbei unter dem Gleis G schematisch der Verlauf des Berggipfels BG der Ablaufanlage A skizziert. Darüber hinaus ist ein Mast M angedeutet, an dem in unterschiedlicher Höhe mehrere aus Gründen der Übersichtlichkeit nicht dargestellte Ultraschallsensoren angebracht sind. Die Ultraschallsensoren sind dabei Bestandteil einer Ultraschalleinrichtung, die zusätzlich beispielsweise eine Auswerteeinheit zur Verarbeitung und Auswertung der von den Ultraschallsensoren erfassten Messdaten umfassen kann. Dabei kann die Ultraschalleinrichtung als Ganzes entweder am Mast M oder in seiner Nähe oder auch räumlich entfernt vorgesehen sein. Im letzteren Fall könnten die Komponenten der Ultraschalleinrichtung über eine Datenverbindung beliebiger Art, drahtlos oder drahtgebunden, miteinander verbunden sein.

In dem in der Figur 1 dargestellten Ausführungsbeispiel dient die Ultraschalleinrichtung der Trennstellenermittlung, dass heißt anhand des zeitlichen Verlaufs des durch die Ultraschallsensoren erfassten bzw. aus Messdaten der Ultraschallsensoren bestimmten Abstands wird eine Trennstelle zwischen einem ablaufenden Schienenfahrzeug 1 und einem nachfolgenden Schienenfahrzeug 2, 3 erkannt. Dabei ist in Figur 1 der Zeitpunkt skizziert, der unmittelbar vor der Trennung der Abläufe liegt. Die weitere zeitliche Entwicklung soll im Folgenden anhand von Figur 2 näher erläutert werden.

Die Figur 2 zeigt zur weiteren Erläuterung des ersten Ausführungsbeispiels des erfindungsgemäßen Verfahrens eine weitere schematische Skizze der Ablaufanlage nach der Trennung des ablaufenden Schienenfahrzeugs. Dabei entspricht die Darstellung derjenigen der Figur 1, wobei jeweils identische Komponenten durch dieselben Bezugszeichen gekennzeichnet sind. Letzteres gilt jeweils auch bezüglich der weiteren Figuren.

Wie in Figur 2 erkennbar ist, hat sich das ablaufende Schienenfahrzeug 1 zwischenzeitlich von den übrigen ablaufenden Schienenfahrzeugen 2, 3 getrennt, dass heißt, es ist in den durch Schwerkraft angetriebenen freien Lauf übergegangen. Die hierdurch entstandene Trennstelle zwischen dem ablaufenden Schienenfahrzeug 1 und den Schienenfahrzeugen 2, 3, dass heißt, den als nächstes zum Ablauf anstehenden Abläufen, kann nun mittels der an dem Mast M montierten Ultraschallsensoren erkannt werden. Hierzu wird aus den Messdaten der Ultraschallsensoren der Ultraschalleinrichtung der Abstand der Sensoren, bzw. gegebenenfalls auch eines einzelnen Sensors, zu Bauteilen des jeweiligen ablaufenden Schienenfahrzeugs 1 und/oder zur Ladung dieses Fahrzeugs 1 bestimmt. Der zeitliche Verlauf des bestimmten Abstandes bzw. der bestimmten Abstände ermöglicht es nun, eine Trennstelle zwischen dem ablaufenden Schienenfahrzeug 1 und dem nachfolgenden Schienenfahrzeug 2, 3 zu erkennen. Es sei darauf hingewiesen, dass in Figur 2 noch nicht erkennbar ist, ob es sich bei dem nachfolgenden Schienenfahrzeug lediglich um den Wagen 2 oder um die Wagen 2 und 3, gegebenenfalls noch verbunden mit weiteren nachfolgenden, in Figur 2 nicht dargestellten Wagen, handeln wird.

Eine Trennstelle zwischen dem ablaufenden Schienenfahrzeug 1 und dem nachfolgenden Schienenfahrzeug 2, 3 wird vorzugsweise erkannt, sofern der von dem Ultraschallsensor gemessene Abstand bzw. die von den Ultraschallsensoren gemessenen Abstände für eine vorgegebene Zeitdauer einen Grenzwert überschreitet bzw. überschreiten. Dabei ist die vorgegebene Zeitdauer groß genug zu wählen, damit eine zuverlässige Erkennung der Trennstelle möglich ist. Andererseits darf die vorgegebene Zeitdauer auch nicht zu groß gewählt werden, da in diesem Fall eine Erkennung der Trennstelle möglicherweise durch das nachfolgende Schienenfahrzeug verhindert werden würde.

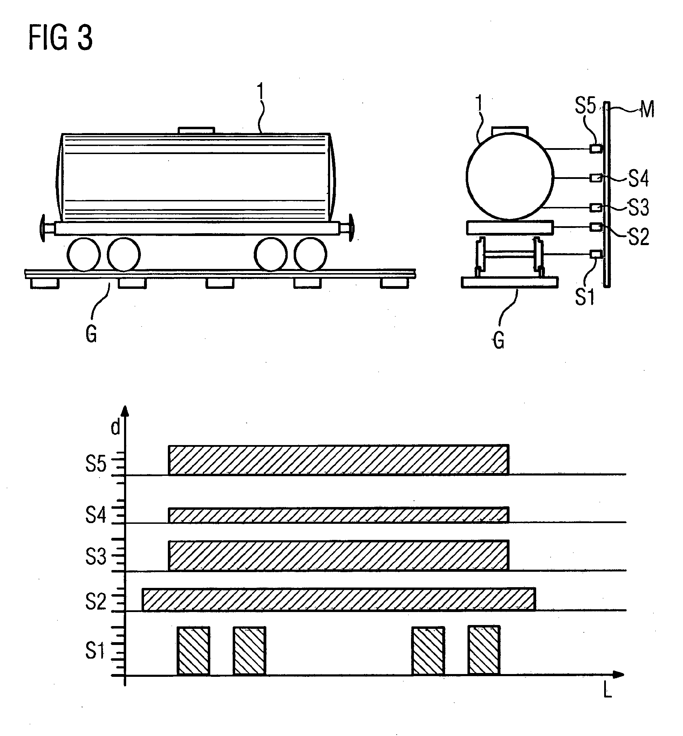

Figur 3 zeigt schematische Skizzen zur Erläuterung eines zweiten Ausführungsbeispiels des erfindungsgemäßen Verfahrens anhand eines ablaufenden Fahrzeugs in Form eines Kesselwagens. Im Detail ist im oberen linken Teil der Figur 3 eine Seitenansicht eines ablaufenden Schienenfahrzeuges 1 in Form eines Kesselwagens gezeigt, der sich über ein Gleis G bewegt. Der obere rechte Teil der Figur zeigt eine Vorderansicht des ablaufenden Schienenfahrzeugs 1. Neben dem Gleis G ist an einem Mast M eine Ultraschalleinrichtung angebracht, die fünf Ultraschallsensoren S1, S2, S3, S4, S5 aufweist. Entsprechend der Darstellung der Figur 3 handelt es sich hierbei jeweils um Sensoren, die sowohl als Sender als auch auf Empfänger ausgebildet sind, so dass ein separater Empfänger nicht erforderlich ist.

Die Ultraschallsensoren S1, S2, S3, S4, S5 führen eine kontinuierliche Erfassung von Messdaten durch, aus denen der jeweilige Abstand der Ultraschallsensoren S1, S2, S3, S4, S5 zu Bauteilen des ablaufenden Schienenfahrzeuges 1 bestimmt wird. Dabei kann die entsprechende Bestimmung je nach Ausprägung der Ultraschalleinrichtung bereits durch den jeweiligen Ultraschallsensor S1, S2, S3, S4, S5 selbst oder aber durch eine Auswerteeinheit oder Steuerkomponente der Ultraschalleinrichtung erfolgen.

Im unteren Teil der Figur 3 ist der jeweilige Abstand d der Ultraschallsensoren S1, S2, S3, S4, S5 zu dem sich an den Sensoren S1, S2, S3, S4, S5 vorbeibewegenden ablaufenden Schienenfahrzeug 1 als Funktion der Wagenlänge L des Schienenfahrzeugs 1 dargestellt. Dabei entsprechen die fünf übereinander angeordneten schraffierten "Bänder" den fünf Ultraschallsensoren S1, S2, S3, S4, S5, wobei die vertikale Ausdehnung des jeweiligen Bandes zu jedem Zeitpunkt ein Maß für den Abstand d des jeweiligen Ultraschallsensors S1, S2, S3, S4, S5 von dem ablaufenden Schienenfahrzeug 1 ist.

Im Detail ist beispielsweise erkennbar, dass der Ultraschallsensor S1 lediglich am Anfang und am Ende der Vorbeifahrt des Schienenfahrzeugs 1 eine Anwesenheit des Schienenfahrzeugs 1 detektiert. Ursache hierfür ist, dass der Ultraschallsensor S1 aufgrund seiner Montagehöhe an dem Mast M lediglich die Räder des ablaufenden Schienenfahrzeugs 1 erfasst. Zwischen den Rädern erfasst der Ultraschallsensor S1 kein in seinem Nahbereich liegendes Objekt, das heißt der Abstand des nächsten Objektes überschreitet beispielsweise einen maximalen Wert, so dass die entsprechenden Messdaten als nicht zu einem vorbeifahrenden Schienenfahrzeug gehörig erkannt und daher verworfen werden. Im Unterschied hierzu befindet sich der Ultraschallsensor S2 auf einer Höhe des Mastes M, die es ihm erlaubt, während der gesamten Vorbeifahrt des ablaufenden Schienenfahrzeugs 1 ein Bauteil des Schienenfahrzeugs 1 zu detektieren. Aufgrund des Pufferüberhangs detektiert der Ultraschallsensor S2 somit ein Bauteil des ablaufenden Schienenfahrzeugs 1 sowohl früher als auch länger als der Ultraschallsensor S1, das heißt, der Ultraschallsensor S2 erfasst eine größere Länge L des Schienenfahrzeugs 1. Wie darüber hinaus aus dem rechten oberen Teil der Figur 3 erkennbar ist, erfasst der Ultraschallsensor S2 im Vergleich zum Ultraschallsensor S1 weiterhin einen Bestandteil des ablaufenden Schienenfahrzeugs 1, der einen geringeren Abstand zu dem betreffenden Ultraschallsensor S2 aufweist. Dies ist in der unteren Darstellung der Figur 3 dadurch erkennbar, dass der Abstand d für den Ultraschallsensor S2 kleiner ist als für den Ultraschallsensor S1, was dadurch deutlich wird, dass die Höhe des Bandes, d.h. seine vertikale Ausdehnung, des Ultraschallsensors S2 geringer ist als die der vier "Teilbänder", welche die Messwerte des Ultraschallsensors S1 repräsentieren.

Wie aus Figur 3 ersichtlich ist, ermöglicht es die beschriebene Ausführungsform des erfindungsgemäßen Verfahrens vorteilhafterweise, nicht nur ein Höhenprofil, das heißt insbesondere die Höhe, des ablaufenden Schienenfahrzeugs 1 zu bestimmen, sondern darüber hinaus des Weiteren auch ein Seitenprofil des ablaufenden Schienenfahrzeugs 1 zu ermitteln. Dies ermöglicht es beispielsweise, anhand eines Vergleichs mit zuvor erfassten und gespeicherten Normprofilen den Typ und/oder dem Beladungszustand des ablaufenden Schienenfahrzeugs 1 zu bestimmen. Die entsprechende Information kann dabei von einer die Ablaufanlage steuernden Steuereinrichtung, die in Figur 3 aus Gründen der Übersichtlichkeit nicht dargestellt ist, für eine besonders genaue Vorausbestimmung des Ablaufverhaltens des ablaufenden Schienenfahrzeugs 1 genutzt werden. Dies ermöglicht es unter anderem, den Durchsatz der Ablaufanlage zu optimieren.

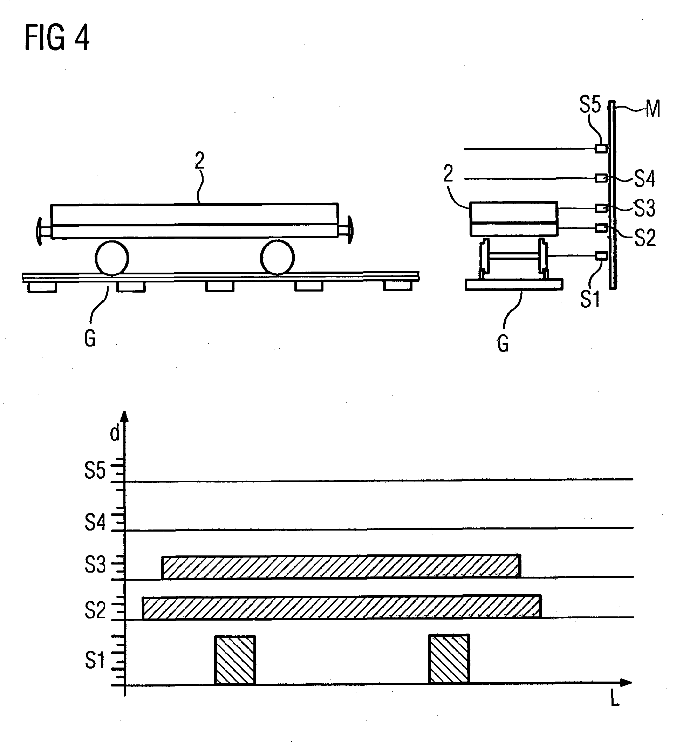

Figur 4 zeigt schematische Skizzen zur Erläuterung eines zweiten Ausführungsbeispiels des erfindungsgemäßen Verfahrens anhand eines ablaufenden Fahrzeugs in Form eines Flachwagens. Die Darstellung der Figur 4 entspricht derjenigen der Figur 3, wobei im Unterschied zu dieser anstelle eines Kesselwagens ein ablaufendes Schienenfahrzeug 2 in Form eines Flachwagens gezeigt ist.

Wie aus dem unteren Teil der Figur 4 erkennbar ist, liefern die Ultraschallsensoren S4 und S5 in diesem Fall kein Signal bzw. der von diesen Ultraschallsensoren S4, S5 bzw. aus deren Messdaten bestimmte Abstand d überschreitet einen Maximalwert, so dass diese Messdaten bei der Auswertung nicht berücksichtigt werden. Im Vergleich der Figur 4 mit der Figur 3 wird überaus deutlich, dass die beschriebene Ausführungsform des erfindungsgemäßen Verfahrens sowie der erfindungsgemäßen Steuereinrichtung sowohl die Ermittlung eines Höhen- als auch eines Seitenprofils erlaubt. So verdeutlicht der untere Teil der Figur 4, dass nicht nur die Höhe des ablaufenden Schienenfahrzeugs 2 zumindest näherungsweise bestimmt werden kann, sondern darüber hinaus auch durch einen Vergleich mit zuvor ermittelten Referenzwerten das ablaufenden Schienenfahrzeug 2 als Flachwagen erkannt werden kann.

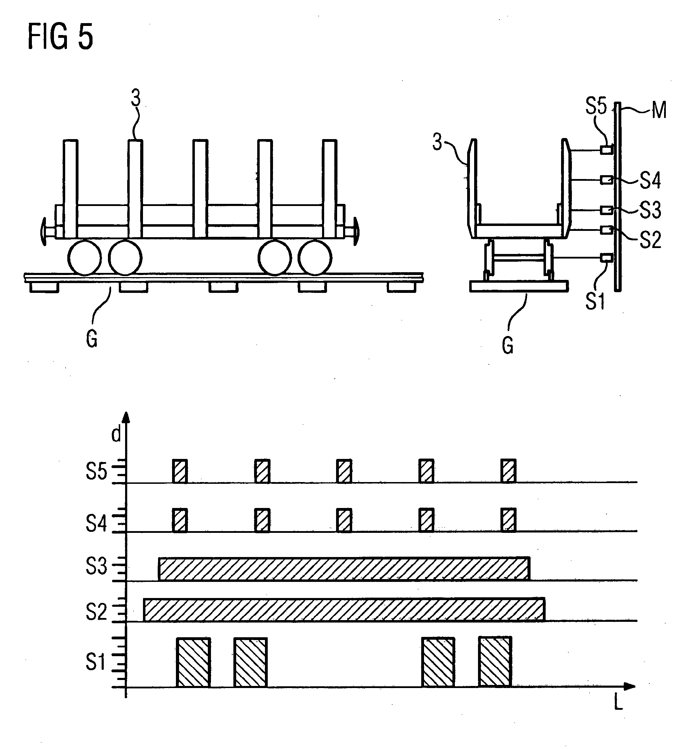

Figur 5 zeigt schematische Skizzen zur Erläuterung eines zweiten Ausführungsbeispiels des erfindungsgemäßen Verfahrens anhand eines ablaufenden Fahrzeugs in Form eines Rungenwagens. Die Darstellung entspricht wiederum derjenigen der Figuren 3 und 4.

Bei dem ablaufenden Schienenfahrzeug 3 der Figur 5 handelt es sich um einen Rungenwagen. Wie der untere Teil dieser Figur wiederum deutlich macht, kann auch ein solcher Rungenwagen hinsichtlich seines Typs von anderen Wagentypen, wie beispielsweise den zuvor dargestellten Kessel- bzw. Flachwagen deutlich unterschieden werden. Darüber hinaus ist im Falle eines Rungen- oder Flachwagens auch eine Erkennung des Beladungszustandes des ablaufenden Schienenfahrzeugs möglich.

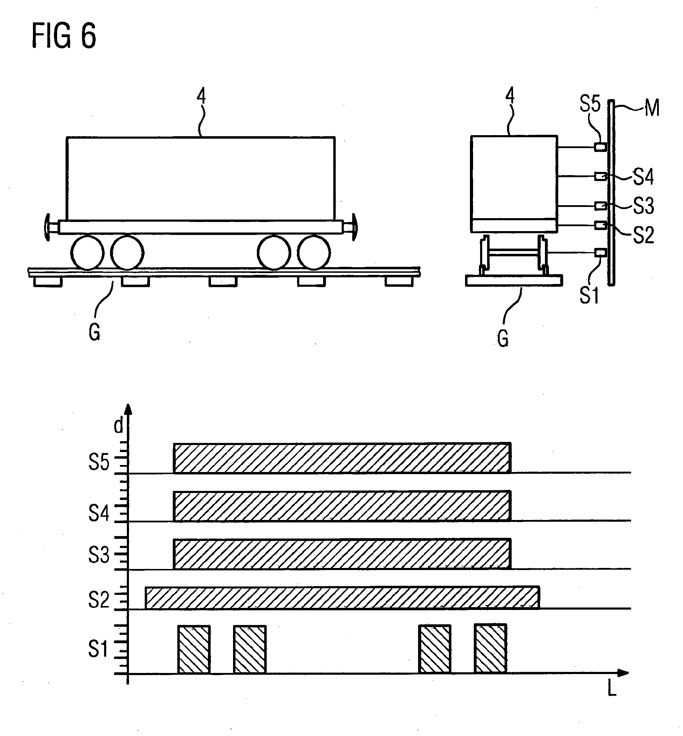

Figur 6 zeigt schematische Skizzen zur Erläuterung eines zweiten Ausführungsbeispiels des erfindungsgemäßen Verfahrens anhand eines ablaufenden Fahrzeugs in Form eines Kasten- bzw. Containerwagen. Dabei entspricht die Darstellung wiederum derjenigen der Figuren 3 bis 5. Auch bezüglich des hier gezeigten Wagentyps ergeben sich, wie insbesondere aus dem unteren Teil der Figur 6 deutlich wird, erhebliche Unterschiede im Vergleich zu den zuvor beschriebenen Wagentypen.

Entsprechend den vorstehenden Ausführungen ermöglicht die beschriebene Ausführungsform des erfindungsgemäßen Verfahrens bzw. eine entsprechende Ausführungsform der erfindungsgemäßen Steuereinrichtung somit neben einer zuverlässigen Trennstellenermittlung darüber hinaus auch eine Bestimmung des Höhen- und des Seitenprofils von ablaufenden Schienenfahrzeugen.

Hierdurch kann die Leistungsfähigkeit einer Rangieranlage, das heißt einer Ablaufanlage des schienengebundenen Verkehrs, deutlich gesteigert werden. Neben dieser Steigerung der Leistungsfähigkeit der Steuereinrichtung und damit verbunden der Ablaufanlage selbst besteht entsprechend den vorstehenden Ausführungen im Vergleich zu bekannten Verfahren, bei denen Lichtgitter bzw. Lichtvorhänge eingesetzt werden, erhebliche Vorteile hinsichtlich des Aufwands und der Flexibilität bezüglich der Montage einer entsprechenden Sensoreinrichtung. Darüber hinaus bieten Ultraschallsensoren im Betrieb weiterhin auch den Vorteil, dass sie im Unterschied zu lichtempfindlichen Sensoren unempfindlich gegen störende Lichteinstrahlung sind.

## Patentansprüche

1. Steuereinrichtung für eine Ablaufanlage (A) des schienengebundenen Verkehrs mit einer Sensoreinrichtung zum Erfassen von auf ablaufende Schienenfahrzeuge (1, 2, 3) bezogenen Messdaten, wobei die Sensoreinrichtung eine zumindest einen Ultraschallsensor (S1, S2, S3, S4, S5) umfassende Ultraschalleinrichtung ist,
**dadurch gekennzeichnet,**
- **dass** die Steuereinrichtung ausgehend von den Messdaten zum Bestimmen des Abstands des Ultraschallsensors bzw. des jeweiligen Abstands der Ultraschallsensoren (S1, S2, S3, S4, S5) zu Bauteilen des jeweiligen ablaufenden Schienenfahrzeugs (1, 2, 3) und/oder zur Ladung des jeweiligen ablaufenden Schienenfahrzeugs (1, 2, 3) ausgebildet ist,
- **dass** die Steuereinrichtung zum Ermitteln eines Höhenprofils des ablaufenden Schienenfahrzeugs (1, 2, 3) aus dem bestimmten Abstand bzw. den bestimmten Abständen ausgebildet ist und
- **dass** die Steuereinrichtung zur Verwendung des ermittelten Höhenprofils für eine Berechnung des voraussichtlichen Laufverhaltens des ablaufenden Schienenfahrzeugs (1, 2, 3) ausgebildet ist.

2. Steuereinrichtung für eine Ablaufanlage (A) des schienengebundenen Verkehrs, insbesondere nach Anspruch 1, mit einer Sensoreinrichtung zum Erfassen von auf ablaufende Schienenfahrzeuge (1, 2, 3) bezogenen Messdaten, wobei die Sensoreinrichtung eine zumindest einen Ultraschallsensor (S1, S2, S3, S4, S5) umfassende Ultraschalleinrichtung ist,
**dadurch gekennzeichnet,**
- **dass** die Steuereinrichtung ausgehend von den Messdaten zum Bestimmen des Abstands des Ultraschallsensors bzw. des jeweiligen Abstands der Ultraschallsensoren (S1, S2, S3, S4, S5) zu Bauteilen des jeweiligen ablaufenden Schienenfahrzeugs (1, 2, 3) und/oder zur Ladung des jeweiligen ablaufenden Schienenfahrzeugs (1, 2, 3) ausgebildet ist,
- **dass** die Steuereinrichtung zum Ermitteln eines Seitenprofils des ablaufenden Schienenfahrzeugs (1, 2, 3) aus dem bestimmten Abstand bzw. den bestimmten Abständen ausgebildet ist und
- **dass** die Steuereinrichtung zum Bestimmen des Typs und/oder des Beladungszustands des ablaufenden Schienenfahrzeugs (1, 2, 3) aus dem ermittelten Seitenprofil ausgebildet ist.

3. Steuereinrichtung nach Anspruch 1 oder 2,
**dadurch gekennzeichnet, dass** die Ultraschalleinrichtung mehrere in unterschiedlicher Höhe angebrachte Ultraschallsensoren (S1, S2, S3, S4, S5) aufweist.

4. Steuereinrichtung nach einem der vorangehenden Ansprüche,
**dadurch gekennzeichnet, dass** sie zum Erkennen einer Trennstelle zwischen einem ablaufenden Schienenfahrzeug (1) und einem nachfolgenden Schienenfahrzeug (2, 3) anhand des zeitlichen Verlaufs des bestimmten Abstands bzw. der bestimmten Abstände ausgebildet ist.

5. Steuereinrichtung nach Anspruch 4,
**dadurch gekennzeichnet, dass** sie zum Erkennen einer Trennstelle zwischen dem ablaufenden Schienenfahrzeug (1) und dem nachfolgenden Schienenfahrzeug (2, 3) ausgebildet ist, sofern der von dem Ultraschallsensor gemessene Abstand bzw. die von den Ultraschallsensoren (S1, S2, S3, S4, S5) gemessenen Abstände für eine vorgegebene Zeitdauer einen Grenzwert überschreitet bzw. überschreiten.

6. Steuereinrichtung nach einem der Ansprüche 4 oder 5,
**dadurch gekennzeichnet, dass** sie zum Melden der erkannten Trennstelle an eine zentrale Steuereinheit ausgebildet ist.

7. Verfahren zum Betreiben einer Ablaufanlage (A) des schienengebundenen Verkehrs, bei dem auf ablaufende Schienenfahrzeuge (1, 2, 3) bezogene Messdaten mittels Ultraschall erfasst werden,
**dadurch gekennzeichnet, dass**
- aus den Messdaten der Abstand des Ultraschallsensors bzw. der jeweilige Abstand der Ultraschallsensoren (S1, S2, S3, S4, S5) zu Bauteilen des jeweiligen ablaufenden Schienenfahrzeugs (1, 2, 3) und/oder zur Ladung des jeweiligen ablaufenden Schienenfahrzeugs (1, 2, 3) bestimmt wird,
- aus dem bestimmten Abstand bzw. den bestimmten Abständen ein Höhenprofil des ablaufenden Schienenfahrzeugs (1, 2, 3) ermittelt wird und
- das ermittelte Höhenprofil für eine Berechnung des voraussichtlichen Laufverhaltens des ablaufenden Schienenfahrzeugs (1, 2, 3) verwendet wird.

8. Verfahren zum Betreiben einer Ablaufanlage (A) des schienengebundenen Verkehrs, insbesondere nach Anspruch 7, bei dem auf ablaufende Schienenfahrzeuge (1, 2, 3) bezogene Messdaten mittels Ultraschall erfasst werden,
**dadurch gekennzeichnet, dass**
- aus den Messdaten der Abstand des Ultraschallsensors bzw. der jeweilige Abstand der Ultraschallsensoren (S1, S2, S3, S4, S5) zu Bauteilen des jeweiligen ablaufenden Schienenfahrzeugs (1, 2, 3) und/oder zur Ladung des jeweiligen ablaufenden Schienenfahrzeugs (1, 2, 3) bestimmt wird,
- aus dem bestimmten Abstand bzw. den bestimmten Abständen ein Seitenprofil des ablaufenden Schienenfahrzeugs (1, 2, 3) ermittelt wird und
- aus dem ermittelten Seitenprofil der Typ und/oder der Beladungszustand des ablaufenden Schienenfahrzeugs (1, 2, 3) bestimmt wird.

9. Verfahren nach Anspruch 7 oder 8,
**dadurch gekennzeichnet, dass** die Messdaten von einer Ultraschalleinrichtung erfasst werden, die mehrere in unterschiedlicher Höhe angebrachte Ultraschallsensoren (S1, S2, S3, S4, S5) aufweist.

10. Verfahren nach einem der Ansprüche 7 bis 9,
**dadurch gekennzeichnet, dass** anhand des zeitlichen Verlaufs des bestimmten Abstands bzw. der bestimmten Abstände eine Trennstelle zwischen einem ablaufenden Schienenfahrzeug (1) und einem nachfolgenden Schienenfahrzeug (2, 3) erkannt wird.

11. Verfahren nach Anspruch 10,
**dadurch gekennzeichnet, dass** eine Trennstelle zwischen dem ablaufenden Schienenfahrzeug (1) und dem nachfolgenden Schienenfahrzeug (2, 3) erkannt wird, sofern der von dem Ultraschallsensor gemessene Abstand bzw. die von den Ultraschallsensoren gemessenen Abstände für eine vorgegebene Zeitdauer einen Grenzwert überschreitet bzw. überschreiten.

12. Verfahren nach einem der Ansprüche 10 oder 11,
**dadurch gekennzeichnet, dass** die erkannte Trennstelle an eine zentrale Steuereinheit gemeldet wird.

## Claims

1. Control device for a gravity shunting yard (A) for rail traffic having a sensor device for acquiring measurement data relating to travelling railway vehicles (1, 2, 3), wherein the sensor device is an ultrasound device including at least one ultrasound sensor (S1, S2, S3, S4, S5),
**characterised in that**
- the control device is embodied based on the measurement data to determine the distance of the ultrasound sensor or of the respective distance of the ultrasound sensors (S1, S2, S3, S4, S5) from components of the respective travelling railway vehicle (1, 2, 3) or from load of the respective travelling railway vehicle (1, 2, 3),
- the control device is embodied to determine a height profile of the travelling railway vehicle (1, 2, 3) from the determined distance or the determined distances and
- the control device is embodied to use the determined height profile in order to calculate the expected running performance of the travelling railway vehicle (1, 2, 3).

2. Control device for a gravity shunting yard (A) for rail traffic, in particular according to claim 1, having a sensor device for detecting measurement data relating to travelling railway vehicles (1, 2, 3), wherein the sensor device is an ultrasound device including at least one ultrasound sensor (S1, S2, S3, S4, S5),
**characterised in that**
- the control device is embodied based on the measurement data to determine the distance of the ultrasound sensor or of the respective distance of the ultrasound sensors (S1, S2, S3, S4, S5) from components of the respective travelling railway vehicle (1, 2, 3) or from load of the respective travelling railway vehicle (1, 2, 3),
- the control device is embodied to determine a lateral profile of the travelling railway vehicle (1, 2, 3) from the determined distance or the determined distances and
- the control device is embodied to determine the type or the load condition of the travelling railway vehicle (1, 2, 3) from the determined lateral profile.

3. Control device according to claim 1 or 2,
**characterised in that**
the ultrasound device comprises a number of ultrasound sensors (S1, S2, S3, S4, S5) attached at different heights.

4. Control device according to one of the preceding claims,
**characterised in that**
it is embodied to identify a cut-off point between a travelling railway vehicle (1) and a subsequent railway vehicle (2, 3) with the aid of the temporal progression of the determined distance or the determined distances.

5. Control device according to claim 4,
**characterised in that**
it is embodied to identify a cut-off point between the travelling railway vehicle (1) and the following railway vehicle (2, 3), provided the distance measured by the ultrasound sensor or the distances measured by the ultrasound sensors (S1, S2, S3, S4, S5) exceed/s a limit value for a predetermined period of time.

6. Control device according to one of claims 4 or 5,
**characterised in that** it is embodied to communicate the identified cut-off point to a central control unit.

7. Method for operating a gravity shunting yard (A) for rail traffic, in which measurement data relating to the travelling railway vehicles (1, 2, 3) is acquired by means of ultrasound,
**characterised in that**
- the distance of the ultrasound sensor or the respective distance of the ultrasound sensors (S1, S2, S3, S4, S5) from components of the respective travelling railway vehicle (1, 2, 3) or from load of the respective travelling railway vehicle (1, 2, 3) is determined from the measurement data,
- a height profile of the travelling railway vehicle (1, 2, 3) is determined from the determined distance or the determined distances and
- the determined height profile is used to calculate the expected running performance of the travelling railway vehicle (1, 2, 3).

8. Method for operating a gravity shunting yard (A) for rail traffic, in particular according to claim 7, in which measurement data relating to travelling railway vehicles (1, 2, 3) is acquired by means of ultrasound,
**characterised in that**
- the distance of the ultrasound sensor or the respective distance of the ultrasound sensors (S1, S2, S3, S4, S5) from components of the respective travelling railway vehicle (1, 2, 3) or from load of the respective travelling railway vehicle (1, 2, 3) is determined from the measurement data,
- a lateral profile of the travelling railway vehicle (1, 2, 3) is determined from the determined distance or determined distances and
- the type or the load condition of the travelling railway vehicle (1, 2, 3) is determined from the determined lateral profile.

9. Method according to claim 7 or 8,
**characterised in that**
the measurement data is acquired by an ultrasound device, which has a number of ultrasound sensors (S1, S2, S3, S4, S5) attached at different heights.

10. Method according to one of claims 7 to 9,
**characterised in that**
with the aid of the temporal progression of the determined distance or the determined distances, a cut-off point is identified between a travelling railway vehicle (1) and a following railway vehicle (2, 3).

11. Method according to claim 10,
**characterised in that**
a cut-off point is determined between the travelling railway vehicle (1) and the following railway vehicle (2, 3), provided the distance measured by the ultrasound sensor or the distances measured by the ultrasound sensors exceeds/exceed a limit value for a predetermined period of time.

12. Method according to one of claims 10 to 11,
**characterised in that**
the identified cut-off point is communicated to a central control unit.

## Revendications

1. Dispositif de commande pour une installation (A) de triage du trafic ferroviaire, comprenant un dispositif de capteur pour la détection de données de mesure se rapportant à des véhicules ( 1, 2, 3 ) ferroviaires passant la bosse, le dispositif de capteur étant un dispositif à ultrasons comprenant au moins un capteur ( S1, S2, S3, S4, S5 ) d'ultrasons,
**caractérisé**
- **en ce que** le dispositif de commande est constitué pour, à partir des données de mesure, déterminer la distance du capteur d'ultrasons ou la distance respective des capteurs ( S1, S2, S3, S4, S5 ) d'ultrasons à des éléments du véhicule ( 1, 2, 3 ) ferroviaire respectif passant la bosse et/ou pour le chargement du véhicule ( 1, 2, 3 ) ferroviaire respectif passant la bosse,
- **en ce que** le dispositif de commande est constitué pour déterminer un profil en hauteur du véhicule ( 1, 2, 3 ) ferroviaire passant la bosse à partir de la distance déterminée ou des distances déterminées et
- **en ce que** le dispositif de commande est constitué pour utiliser le profil en hauteur déterminé pour un calcul du comportement de marche du véhicule ( 1, 2, 3 ) ferroviaire passant la bosse.

2. Dispositif de commande pour une installation ( A ) de triage du trafic ferroviaire, notamment suivant la revendication 1, comprenant un dispositif de capteur pour la détection de données de mesure se rapportant à des véhicules ( 1, 2, 3 ) ferroviaires passant la bosse, le dispositif de capteur étant un dispositif à ultrasons comprenant au moins un capteur ( S1, S2, S3, S4, S5 ) d'ultrasons,
**caractérisé en ce que**
- **en ce que** le dispositif de commande est constitué pour, à partir des données de mesure, déterminer la distance du capteur d'ultrasons ou la distance respective des capteurs ( S1, S2, S3, S4, S5 ) d'ultrasons à des éléments du véhicule ( 1, 2, 3 ) ferroviaire respectif passant la bosse et/ou pour le chargement du véhicule ( 1, 2, 3 ) ferroviaire respectif passant la bosse,
- **en ce que** le dispositif de commande est constitué pour déterminer un profil latéral du véhicule ( 1, 2, 3 ) ferroviaire passant la bosse à partir de la distance déterminée ou des distances déterminées et
- **en ce que** le dispositif de commande est constitué pour utiliser le profil latéral déterminé pour un calcul du comportement de marche du véhicule ( 1, 2, 3 ) ferroviaire passant la bosse et
- **en ce que** le dispositif de commande est constitué pour déterminer le type et/ou l'état de chargement du véhicule ( 1, 2, 3 ) ferroviaire passant la bosse à partir du profil latéral déterminé.

3. Dispositif de commande suivant la revendication 1 ou 2,
**caractérisé en ce que**
le dispositif à ultrasons a plusieurs capteurs ( S1, S2, S3, S4, S5 ) d'ultrasons placés à des niveaux différents.

4. Dispositif de commande suivant l'une des revendications précédentes,
**caractérisé en ce qu'**il est constitué pour détecter un point de séparation entre un véhicule ( 1 ) ferroviaire passant la bosse et un véhicule ( 2, 3 ) ferroviaire suivant, au moyen de la courbe dans le temps de la distance déterminée ou des distances déterminées.

5. Dispositif de commande suivant la revendication 4,
**caractérisé en ce qu'**il est constitué pour la détection d'un point de séparation entre le véhicule ( 1 ) ferroviaire passant la bosse et le véhicule ( 2, 3 ) ferroviaire suivant, dans la mesure où la distance mesurée par le capteur d'ultrasons ou les distances mesurées par les capteurs ( S1, s2, S3, S4, S5 ) d'ultrasons dépassent une valeur limite pendant une durée donnée.

6. Dispositif de commande suivant l'une des revendications 4 ou 5,
**caractérisé en ce qu'**il est constitué pour indiquer les points de séparation détectés à une unité centrale de commande.

7. Procédé pour faire fonctionner une installation ( A ) de triage du trafic ferroviaire, dans lequel on détecte au moyen d'ultrasons des données de mesure se rapportant à des véhicules ( 1, 2, 3 ) ferroviaires passant la bosse, **caractérisé en ce que**
- on détermine, à partir des données de mesure, la distance du capteur d'ultrasons ou la distance respective des capteurs ( S1, S2, S3, S4, S5 ) d'ultrasons à des éléments du véhicule ( 1, 2, 3 ) ferroviaire respectif passant la bosse et/ou le chargement du véhicule ( 1, 2, 3 ) ferroviaire respectif passant la bosse,
- on détermine, à partir de la distance déterminée ou des distances déterminées, un profil en hauteur du véhicule ( 1, 2, 3 ) ferroviaire passant la bosse et
- on utilise le profil en hauteur déterminé pour un calcul du comportement de marche prévisible du véhicule ( 1, 2, 3 ) ferroviaire passant la bosse.

8. Procédé pour faire fonctionner une installation ( A ) de triage du trafic ferroviaire, notamment suivant la revendication 7, dans lequel on détecte, au moyen d'ultrasons, des données de mesure se rapportant à des véhicules ( 1, 2, 3 ) ferroviaires passant la bosse,
**caractérisé en ce que**
- on détermine, à partir des données de mesure, la distance du capteur d'ultrasons ou la distance respective des capteurs ( S1, S2, S3, S4, S5 ) d'ultrasons à des éléments du véhicule ( 1, 2, 3 ) ferroviaire respectif passant la bosse et/ou le chargement du véhicule ( 1, 2, 3 ) ferroviaire respectif passant la bosse,
- on détermine, à partir de la distance déterminée ou des distances déterminées, un profil latéral du véhicule ( 1, 2, 3 ) ferroviaire passant la bosse et
- on utilise le profil latéral déterminé pour un calcul du comportement de marche prévisible du véhicule ( 1, 2, 3 ) ferroviaire passant la bosse et
- on détermine, à partir du profil latéral déterminé, le type et/ou l'état de chargement du véhicule ( 1, 2, 3 ) ferroviaire passant la bosse.

9. Procédé suivant la revendication 7 ou 8,
**caractérisé en ce que** l'on détecte les données de mesure par un dispositif à ultrasons, qui a des capteurs ( S1, S2, S3, S4, S5 ) d'ultrasons placés à des niveaux différents.

10. Procédé suivant l'une des revendications 7 à 9,
**caractérisé en ce que** l'on détecte, au moyen de la courbe dans le temps de la distance déterminée ou des distances déterminées, un point de séparation entre un véhicule ( 1 ) ferroviaire passant la bosse et un véhicule ( 2, 3 ) ferroviaire suivant.

11. Procédé suivant la revendication 10,
**caractérisé en ce que** l'on détecte un point de séparation entre le véhicule ( 1 ) ferroviaire passant la bosse et le véhicule ( 2, 3 ) ferroviaire suivant, dans la mesure où la distance mesurée par le capteur d'ultrasons ou les distances mesurées par le capteur d'ultrasons dépasse une valeur limite pendant une durée prescrite.

12. Procédé suivant l'une des revendications 10 ou 11,
**caractérisé en ce que**
l'on indique le point de séparation détecté à une unité centrale.
